# EUROPEAN PATENT APPLICATION

(11) **EP 0 859 455 A1**
(43) Date of publication of application: **19.08.1998**
(21) Application number: 96929166.5
(22) Date of filing: 28.08.1996
(51) Int. Cl.: H02N 11/00

(54) **POWERFUL HIGH-SPEED MAGNETIC ENERGY ENGINE**

(30) Priority: 28.08.1995 CN 95108804
(71) Applicant: Mo, Jihong, Dongcheng District, Beijing 100005 (CN)
(72) Inventor: Mo, Jihong, Dongcheng District, Beijing 100005 (CN)
(74) Representative: Isenbruck, Günter, Dr.
(86) International application number: CN9600072
(87) International publication number: WO9708816

(57) **Abstract**

This invention relates to a powerful high-speed energy engine which may convert magnetic energy into mechanical energy, characterized in that it has many sets of magnetic cylinders with permanent magnets, by means of continuously attracted between different polar magnets and replelled between same polar magnets, produces powerful attracting force and repelling. Said device may convert magnetic energy into powerful mechanical energy, and continuously makes work outwardly. This device doesn't consume oil and electricity, and has advantages of noiseless, pollutionless, long life, low-cost, high-speed and high-power.

## Description

### Field of Art

The present invention relates to an apparatus, for converting magnetes energy into mechanical energy and then with the force-enhancing speed-increasing device to enhance the torsional force and increase the rotational speed, being a practical large-capacity, high rotational speed series of "Force-enhancing Magnetic Energy Engine with High-speed" with stepless variable speed.

### Background of Techniques

Hereinbefore, there have been some magnetically driven machines, designed on the basis of utilizing the repellent and attractive forces of permament magnets as actuating forces, both home and abroad, such as those in Chinese inventor Mr. Gau Mingshan's application Patent No. CK 87102256 and Chinese inventor Mr. Zhao Wenxiang's application Patent No. CK 85103467, as well as in a French Pantent No. FR 2553239 and so on.

Hereinbefore, something in common of these magenetically driven machines is utilizing the repellent and attractive forces of permanent magnets as actuating forces, and the difference of them is: directly converting the magnetic force into mechanical force to do retational work in application Patent No. CK 87102256 by Mr. Gao Mingshan, using the ratchet of nature magnetic force curve to eliminite opposite forces and utilizing permanent magnets to make coupler and magnetic gears in Patent No. CK 85103467 invented by Mr. Zhao Wenxiang, and in application Patent No. FR 2553239 of French, using action of the magnetic energy in the interactive area of the field of permanent magnets, causing the permanent magnet lying in the axial plane of the rator to rotate by 180° and resulting in forming a force on the rator to produce mechanical force. The previous magnetically driven machines of prior art present not so less drawbacks and shortcomings, and all make their power systems loss the "conservation of energy" Even though it is a kind of rotable "magnectically driven machine", its torsional force is weak and with very low rotational speed. Therefore, they are neither applicable to power equipment, nor be applied widely.

On the other hand, diesel oil engines, gasoline engines and electrically driven machines which have been applied widely at present for they have many advantages, at the same time serious shortcomings are as follows: they consume plenty of diesel oil, gases and electricity and, more seriously, exhaust poison gases and waste daily is resulting serious environmental pollution and causing extremely serious detrimental to health of mankind and destroying the ecological balance. Pollution threatens mankind and has endless troubles. Perple are forced to search and develop new power equipment and to use new energy source instead of the old one.

### Object of Invention

An object of the invention is to provides a practical magnetic energy engine according to "Law of Conservation and Conversion of Energy", "Principle of Work of Energy" and "Law of Conservation of Mechanical Energy" which utilize the unlike- pole attraction and like-pole repellence between permanent magnets of high magnetic energy carried out repeatedly, continuously and alternatively to convert attractive forces and repellent forces produced into powerful torsional forces, and energy instored into mechanical energy, for work done externally. Furthermore, the torsinal force can be enhanced and the rotational speed can be increased by means of the mass acceleration and the levers' resultant force. Work done externally has to correspondingly consume energy, and every time the magnetic evergy stored in the system has been almost exhausted, new energy will re-introduce in two ways from the outside, one way being to "re-magnetize" the permanent magnets whose magnetic energy is exhausted and the other way being to replace with new permanent magnets in time, so as to ensuring that the "Force-enhancing powerful magnetic energy engine with High Speed" of the present invention can repeatedly be stored with plenty of energy to result in the possibility of continuously work done externally for a long time.

### Scheme of Technique

As whown in figures the "force-enhancing powerful magnetic-energy engine with high-speed" of the present invention comprises: displacing push rod (1), governor gear (2), magnetic block of stator (3), sliding magnetic cylinder (4), crankshaft (5), governor rack (6), moving magnetic cylinder (7), engine body (8), ball bearing (9), bearing seat (10), crank pin (11), moving magnetic block (12), connecting rod (13), speed adjusting shaft (14), governor (15), guide for stator magnetic cylinder (16), inertia fly wheel (17), ball bearing (18), crand shaft extension (19), pinion (20), bearing seat (21), engine body (22), gear wheel (23), ball bearing (24), spindle extension (25), bearing seat (26), stator magnetic block for fly wheel (27), rotator magnetic block (28), stator magnetic block for magnetic cylinder (29), larger unidirectional fly wheel (30), smaller uni-directional fly wheel (31), spindle (32), propelling disk (33), force-enhancing magnetic cylinder (34), upper cover for force-enhancing engine body (35), lower base for engine body (36), upper cover for bearing seat (37), lower base for bearing seat (38), force-enhancing push rod (39), brake handle shaft (42), brake gear (41), connecting bar for smaller unidirectional fly wheel (42), connecting bar for larger unidirectional fly wheel (43), bearing seat (44), mono-engine (45), larger spindle (46), larger gear wheel (47), pinion (48), upper cover for larger engine body (49), lower base for larger engine body (50), slidable connecting pin (51), like-pole stator magnetic block (52), magnetic energy power arrangement (53), force-enhancing and speed-increasing device (54) and guide for moving magnetic block (55).

Crankshaft (5) supported by bearings is mounted on the bearing seats (10) of the engine body; the upper end of connecting rod (13) is rotably mounted on the crank pin (11) and the lower end of the connecting rod is rotably mounted on sliding magnetic cylinder (4), the cylinder being movably mounted on guide (55) of engine body (8) to slide reciprocatingly; and moving magnetic block (12) is replaceably mounted in the sliding magnetic cylinder to slide up and down with the cylinder. Under (opposing to) the sliding magnetic cylinder, moving magnetic cylinder (7) is provided; stator magnetic block (3) is movably mounted in the moving magnetic cylinder; and the moving magnetic cylinder (7) is movably mounted on support rail (16) and caused by a displacing device to move reciprocatingly on rail (16). On the governor there is a elongated slot, the length of which is preferably more than the reciprocation distance of the moving magnetic cylinder by 1 to 2 centimeters. Stator magnetic block (3) can reciprocatingly slide in the elongated slot of the governor (15) along with the moving magnetic cylinder. Governor (15) is movably mounted on the guide of the engine body, the lower end of stator magnetic block (3) is in its elongated slot.

Governor shalf (14) is rotably mounted on the bearing seat of the engine body, governor gear (2) is steadily mounted on the governor shaft to cause the governor gear to engage with the governor rack (6) on the governor, the upper end of push rod (1) is rotably mounted on the sliding magnetic cylinder, and the sliding connecting pin (51) on moxing magnetic cylinder (7) is movably in the elongated slot at the lower end of the push rod to cause the push rod to be eccentric in one direction.Moving magnetic blook (12) mounted in the sliding magnetic cylinder and stator magnetic block (3) mounted in moving magnetic cylinder are matched in unlike poles, and like-pole stator magnetic block (52) mounted on the outer guide of the magnetic cylinder and moving magnetic block (12) in the sliding magnetic cylinder are matched in like poles. When the governor shaft rotates and the governor is driven to move to push stator magnetic block (3) from stop position into operating position, the mutual attraction due to unlike poles occurs between moving magnetic block (12) and stator magnetic block (3), moving the sliding magnetic cylinder with the connecting rod towards moving magnetic cylinder (7) to rotate the crankshaft by an angle and to cause the push rod to move downwords, due to the design of elongated slot at the lower end of the push rod, when the sliding magnetic cylinder is at the uppermost end, the sliding connecting pin (51) on the moving magnetic cylinder will be in the lowermost-position of the elongated slot. Because of the moving down wards of the sliding magnetic cylinder, the elongated slot of the push rod to slide along sliding connecting pin (51) and causes push rod (1) to be inclined to a fixed side each time when it moves downwards, and the design of the elongated slot causes the push rod to move reciprocatingly moving magnetic cylinder (7) towards one side. When sliding magnetic cylinder moves to the lower most position, push rod (1) will also moves moving magnetic cylinder (7) to the most inclined position and causes moving magnetic block (15) and stator magnetic block (3) which attracts moving magnetic block to be apart from mutual contact all-orientationally. The reciprocating translation of the magnetic cylinders optionally varies the contact area between stator magnetic block (3) and moving magnetic block (12),and can apart form contact or relative contact partly, or relative contact of whole area. The "Force-enhancing Powerful Magnetic-energy Engine with High- speed" of the invention has to have at least two pairs (groups) of magnetic blocks to work done on each other, the two paris either being arranged in the circumferential direction of the crank pin (11) of the crankshaft to be implemented on one crank pin or a plane being provided to be implemented on two crank pins, performing non-synchronous motions to cause the dynamic system to achieve and maintain "Energy Conservation" during a corresponding period of time. Every time the magnetic energy stored in the system is almost exhausted, new energy will be re-introduced in two ways in time; one way is to "re-magnitize" and the other way is to replace with new permanent magnetic blocks.
Gear wheel (23) is fixed on crankshaft extension (19) by a key. Additionally, each gear wheel is connected to a pinion to become an integral, slidingly mounting on crankshaft extension (19). Fly wheel (17) is provided with a pinion which is fixed on spindle extension (25) by a key to cause the pinion and gear wheel on spindle extension (25)to engage with the gear wheel and pinion on crankshaft extension (19). Spindle (32) supported by ball bearings is mounted on bearings seats (38) and (37). Propelling disk (33) is fixed to spindle (32) by a key. Larger unidirectional fly wheel (30) and smaller unidirectional fly wheel (31) supported by ball bearings is slidably mounted on spindle (32). The lower end of connencting bar (42) is rotably mounted on smaller unidirectional fly wheel (31) and the lower end of connecting bar (43) is rotably mounted on larger unidirectional fly wheel (30), the upper ends of connecting bars (42) and (43) being rotably connected with the lower end of push rod (39) to become an integral ,while the upper end of push rod (39) being rotably munting on the outer ring of propelling disk (33). Stator magnetic block (27) for fly wheel is replaceably mounted on the smaller unidirectional fly wheel ,rotator magnetic block (28) is replaceably mounted at the joint of the connecting rod and the push rod, stator magnetic block (29) for magnetic cylinder is replaceably mounted on the inner wall of force-enbancing magnetic cylinder (34), and magnetic cylinder (34) is rotably mounted in the inner hole of engine body (35). Brake handle shaft (40) is rotably mounted on the engine body, brake gear (41) is steadily mounted on brake handle shaft (40) and is engaged with the external ring gear of the smaller unidirectional fly wheel and the gear of the force-enhancing magnetic cylinder. The problem of insufficient of rotational force for a monoengine has been solved by connecting multiple monoengines (magnetic energy engine) through transmission gears or other transmission devices to complete work done on a large spindle (40) commonly, forming a multi-engine-transmission and power system.

### Advantageous Effcts

"Force-enhancing Powerful Magnetic Energy Engline with High-speed" descibe in the present invention is of advanced design, rational configuration-simple and convenient operation; since permanent magnets are used as energy source, there are neigher fuel comsumption not electricity consumption, stable performance, noise free and no pollution. When the magnetic energy stored in the system is almost exhausted, new energy can be re-introduced in two ways from the outside; one way is to "re-magentize", the other is replaced with new permament magnetic blocks. The engine is of the feature of stepless variable speed, long life and low manufactruing cost, and a "Magnetic Energy Engine", with different purposes, different capacities and different rotational speeds, can be designed and manufactured according to the requirements. Therefore, development and production, populerization and application of this kind of "Magnetic Energy Engine" not only can save a large amount of diesal oil, gasoline and electric power, but also can avoid environmental pollution so as to beneficial to the health of mankind and the ecological balance as well. The "Force-enhancing Powerful Magnetic Energy Engine with High-speed" which is improved progressively will certainy promote the human communifty to generate worldwide great industrial revolution in the aspects of power, electricity and energy source, and the "Magnetic Energy Engine" which is improved progressively will difinitely gradually substitute the most of fuel-consuming by diesel oil engine gasoline engine and the most of electricity-consuming electrica motor, thus bringing benefit to all the mankind and their furture generations.

### Brief Description of Attached Drawings:

The configuration of a "Magnetic Energy Engine" among "Force-enhancing Powerful Magnetic Energy Engines with High-speed"disclosed in the present invention will be described in detail accompying with the attached drawings, in which:

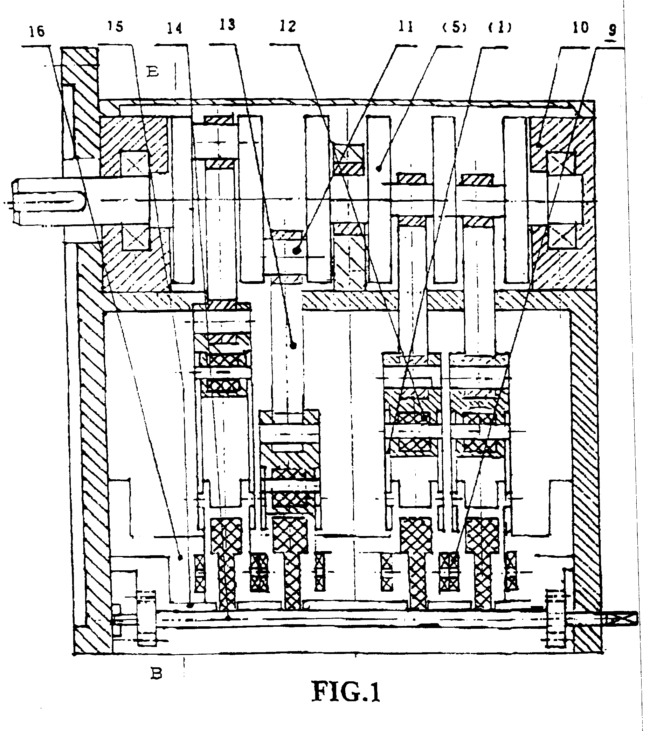

Fig. 1 is a A-A sectional view of a manetic energy engine;

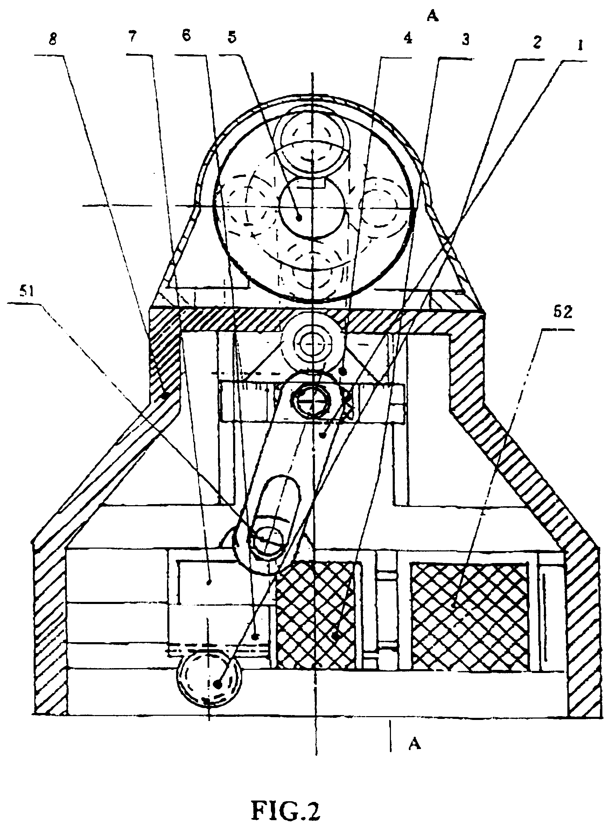

Fig. 2 is a B-B sectional view of the magnetic energy engine;

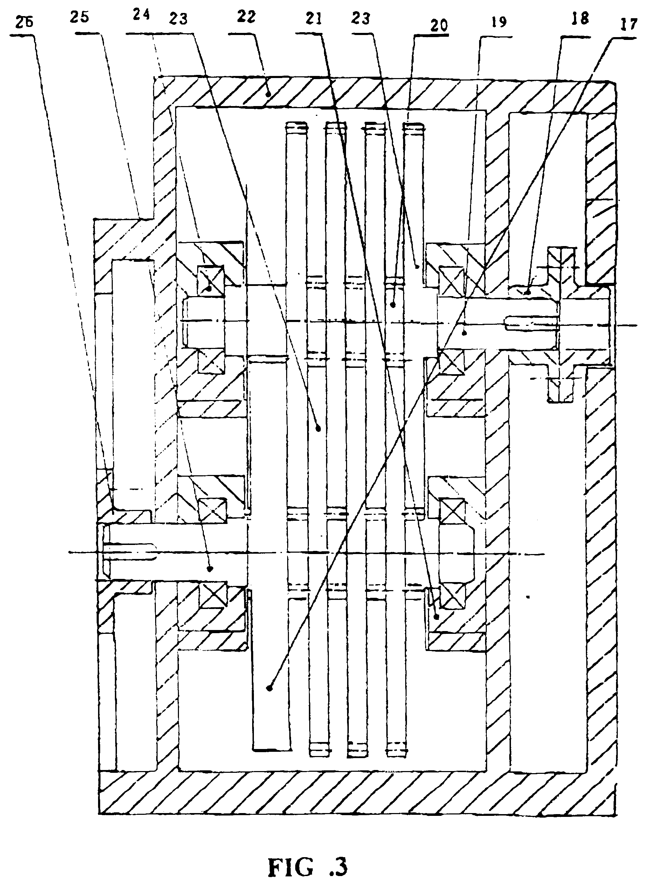

Fig. 3 is the first sectional view of the force-enhancing and speed-increasing device of the magnetic energy engine;

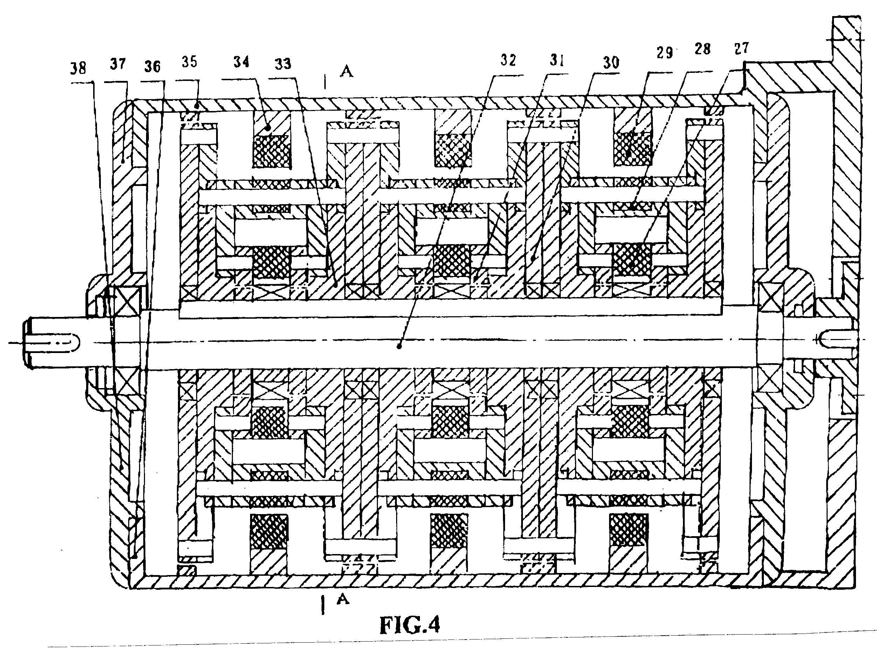

Fig. 4 is the second sectional view of the force-enhancing and speed-increasing device of the magnetic energy engine;

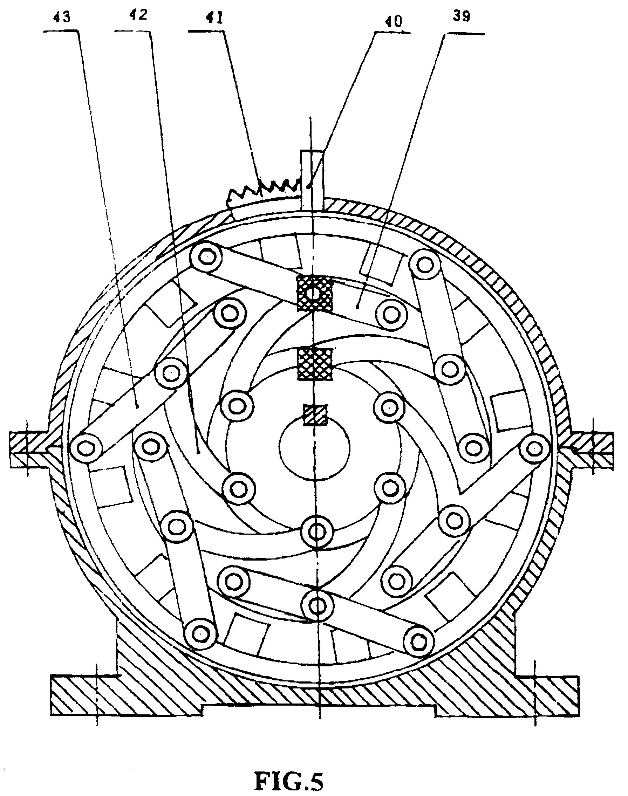

Fig. 5 is the third sectional view of the force-enhancing and speed-increasing device of the magnetic energy engine;

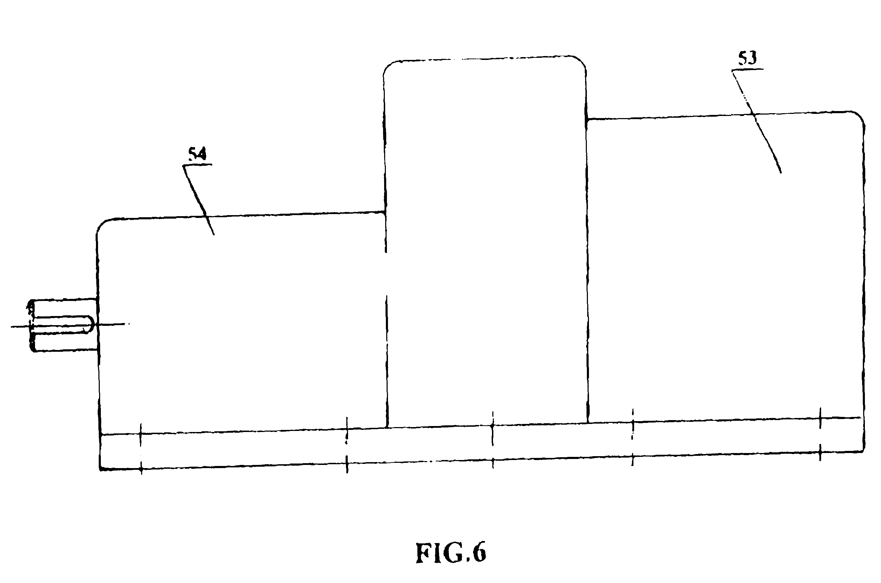

Fig. 6 is a mono-engine of "Force-enhancing Powerful Magnetic Energy Engine with High-speed";

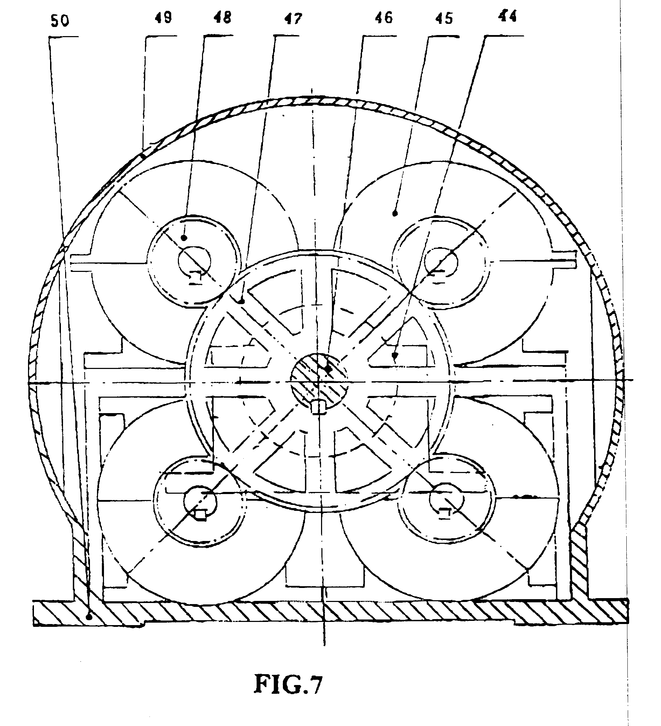

Fig. 7 is a large capacity magnetic energy engine.

### Preferred embodiment of the invention

Once governor shaft (14) is operated to cause governor to push stator magnetic block (3) from stop position to operating position, creating a whole area and all orientational mutually contact of at least a pair of one stator magnetic block (3) and one moving magnetic block (12), the mutual attraction between unlike poles immediately occurs to pull sliding magnetic cylinder with connecting rod (13) towards moving magnetic cylinder (7), rotating crankshaft (5) by an angle. Sliding magnetic cylinder with push rod (2) moves towards moving magnetic cylinder (7) to move moving magnetic cylinder (7) to one side, and every time sliding magnetic cylinder (4) moves to the lowest position, push rod also moves moving magnetci cylinder (7) to the most inclined position and causes moving magnetic block (12) to dislocate with stator magnetic block (2) which attracts it, seperating all orientationally the mutual contact. At this time, another pair or pairs of magnetic blocks have been in the mutually attractive positions between unlike poles and again pull sliding magnetic cylinder with connecting rod towards moving magnetic cylinder, rotating crankshaft (5) an angle. Moving magnetic block (12) which travels back, since the interaction, between and magnetic cylinders magnetic block or other devices will move like-pole stator magnetic block (52) from stop position towards operation position when it reaches a certain position. Since stator magnetic block (52) and moving magnetic block (12) are like-pole matched, like-pole repulsion occurs to move sliding magnetic cylinder towards the crankshaft and again rotate crankshaft by an engle, and since connecting rod mounted on the crank pin performs non-synchronous motion continuously, so as to cause the crankshaft rotate in one deriction forcefully and without stop to convert magnetic energy into mechanical energy to do external work. When the magnetic energy stored in the system is almost exbusted, new energy will be re-introduced in time in two ways from the outside: one way is "re-magnetized" in time, and the other way is replaced with new permanent magnets. Thus, it is ensured for the "Force-enhanced Powerful Magnetic Energy Engine with High-speed" of the invention to store plentiful energy repeatedly, and capable of doing external work continuously for a long time.

Since the rotational speed and power out put of the crankshaft can not meet the needs of mechanical equipment, to achieve the object the gear wheel (23) steadily mounted on crankshaft (19) rototes the pinion slidingly mounted on spindle extension (25), and the gear wheel on the spindle extension also rotates the pinion slidingly mounted on crankshaft (19), and the gear wheel on the crankshaft extension also rotates the pinion of fly wheel fixed to spindle extension (32), causing spindly (32) to increase its rotational speed multiply. The spindle rotates propelling disk (33) at high speed, and propelling disk (33) together with connecting bars (42), (43) and push rod (39) performs lever motions continuously and speedily. The unlike-pole mutual attraction between stator magnetic block (27) variably mounted on the smaller unidirectional flywheel and rotator magnetic block (28) mounted on the connecting rod occurs to create powerful attractive forces, causing the connecting rod and push rod to perform lever motions to push propelling disk (33) forward. When the attractive forces attain to a certain extent; due to the effect of the unidirectional flywheel, dislocation occurs between rotator magnetic block (28) and stator magnetic block (27) which attracts it, and separating from the mutually contact. Due to the rotation of the propelling disk, unlike-pole mutual attraction between rotator magnetic block (28) and stator magnetic block (29) variably mounted on the magnetic cylinder also occurs and creates pwerfed attractive forces, causing the conncting rod and the push rod to carry out new lever motions and to push propelling disk (33) forward. Since connecting bars (42), (43) mounted on the fly wheels and push rod (39) mounted on the propelling disk carry out lever motions repeatedly and speedily under the mutual action of magnetic blocks, spindle (32) is caused to accelerate the rotational speed and multiply the torque force. When it is necessary to reduce rotational speed, adjusting rotational speed, the object can be achieved by operating governor shaft (14) to vary the contact area between stator magnetic block (3) and moving magnetic block (12), because the contact area between stator magnetic block (3) and moving magnetic block (12) is proportional to the rotational speed. When operating governor shaft to move the governor to the stop position, stator magnetic block (3) and moving magnetic block (12) will separate from the mutually conatct all oreintationally and in whole area, magnetic block (3) stops to do work. When operating brake handle shaft (40) to have it moved to the stop position, the engine will stop rotating.

It is possible to form a large capadity "Magnetic Energy Engine" by mounting mutiple units of "Force-enhancing Powerful Magnetic Energy Engine with Hogh-speed" onto a large frame (engine body), which are engaged with each other through gear wheel and pinion (47) and (48) and complete work done on a large spindle (46).

In the "Force-enhancing Powerful Magnetic Energy Engine with High-speed" of the invention, the permanent magnet used can be selected from neodymium-iron-boron, barium ferrite, strontium ferrite and other permanent magnetic materials with high magnetic energy, their maximam magnetic energy product being preferably above 52 mega Gauss and their Curie temperature being preferrably above 480 °C.

The present invention is not limited to above decribed embodiment as only a design among "Force-enhancing Powerful Magnetic Energy Engine with High-speed" product series. All the veriations and modification, made on the spirit substance, principle and configuration of the present invention, belong to the scope of protection. It should be on the basis of claims to understand the scope of protection of the present invention.

## Claims

1. A magnetic energy engine, characterized in comprising:
an engine body (8); a crankshaft (5) mounted in engine body (8); at least one crank pin (11), at least two connecting rods (13) and at least two moving magnetic blocks (12), disposed on the crankshaft, in which one end of the connecting rod (13) being rotably mounted on the crank pin (11) and the other end rotably connected with the moving magnetic blocks (12); and the connecting rods (13) being arranged uniformly in the circular direction of the crank pin; at least two stator magnetic blocks (3) disposed far away from the rotational axis of the crankshaft and opposite to the moving magnetic blocks (12); guide (55) disposed in the engine body, said guide being perpendicular generally to the rotational axis of the crankshaft and causing the moving magnetic blocks (12) to reciprocate up and down along the guide; stator magnetic block guides (16) which are diposed within engine body, said guide being preferably perpendicular to the parallel line of the rotational axis of the crankshaft and the stator magnetic blocks (3) disposed on the stator magnetic block guides (16) can reciprocate along the guide;
displacing device for displacing stator magnetic blocks (3), in which the stator magnetic blocks (3) and the moving magnetic blocks (12) being disposed to be with unlike poles to cause the nearest stator magnetic blocks (3) and the moving magnetic blocks (12) to mutually attract by means of the attractive force between the two magnetic blocks, rotating the crankshaft (5) by an angle, and when the moving magnetic blocks (12) is attracted by the stator magnetic blocks (3) to move to the farthest from the rotation center of the crankshaft (5), the displacing device also causes the stator magnetic block (3) to apart from the mutually attractive position and then causes another pair of the stator magnetic blocks (3) and the moving magnetic blocks (12) in be in the mutually attractive position to rotate the crankshaft (5) also by a new-angle, thereby several pairs of the connecting rods (13) mounted on the crank pin (11) together with the moving magnetic blocks (12) perform a non-synchronons motion to rotate the crankshaft (5) continuously in one direction to do external work.

2. The magnetic energy engine as described in claim 1,
characterized in that every time stator magnetic blocks (3) and the moving magnetic blocks (12) do work through mutual attraction, the magnetic energy stored is almost exhausted, new energy will be introduced in two ways from the outside, one way being replaced with new permanent magnets, and the other way being to remagnetize, thus ensuring that plentyful energy is repeatedly stored in the system.

3. The magnetic energy engine as described in claim 1,
characterized in further comprising also like-pole stator magnetic blocks (52), said like-pole stator magnetic blocks (52) and the moving magnetic blocks (12) are like-pole matched, and are disposed on the extension of the stator magnetic block guides (16); every time the stator magnetic blocks (3) is displaced to the farthest position under the action of the displacing device, the like-pole stator magnetic magnetic blocks (52) and the moving magnetic blocks (12) are caused from mutual separate position to enter like-pole mutual repellent position, further rotating the crankshaft (5) by a new angle.

4. The magnetic energy engine as described in claim 1,
characterized in further comprising moving magnetic cylinders (7), said magnetic cylinder (7) are mounted on the stator magnetic cylinder guides (16), and stator magnetic block can be movably mounted in the moving magnetic cylinders (7).

5. The magnetic energy engine as described in claim 1,
characterized in that said displacing device includes displacing push rods (1) and sliding connecting pins (51), sliding connecting pins (51) being mounted on the moving magnetic cylinders (7), and the upper end of said displacing push rods (1) being rotably connected on the moving magnetic blocks (12) and at the lower end being provided with an elongated slot in which the sliding connecting pin slidably for sliding reciprocatingly.

6. The magnetic energy engine as described in claim 1,
characterized in further comprising sliding magnetic cylinders (4), said magnetic cylinder (4) is mounted movably up and down, on the guide (55), and the moving magnetic blocks (12) is replaceably mounted in the sliding magnetic cylinders (4).

7. The magnetic energy engine as described in claim 1,
characterized in further comprising a speed control device, said device includes a governor shaft (14), a governor (15), a governor gear (2), a governor rack (6); the governor shaft (14) is rotably mounted on the bearing seats of the engine body, the governor gear (2) is steadily mounted on the governor shaft (14), the governor rack (6) is steadily mounted on governor and is engaged with the governor gear (2), and the governor (15) is movably mounted on the guide of the engine body, on governor (15) there is of an elongated slot, the stator magnetic block (3) is slidably in said elongated slot to cause the stator magnetic block (3) to slide reciprocatingly in it; the governor shaft (14) together with governor gear (2), and the governor gear further moves the rack (6) thus to move the governor (15), and the moving of the governor (15) further moves the stator magnetic block, (3) to vary randomly the relative contact area of the stator magnetic blocks (3) and the moving magnetic blocks (12), thus attaining the random variation of the rotatinal speed and power output of said magnetic energy engine.

8. The magnetic energy engine as described in claim 1,
characterized in that on each crank pins (11), four connecting rods (13), are preferably rotably mounted.

9. The magnetic energy engine as described in claim 1,
characterized in that it further comprises a seed increasing device, said device including: engine body; an extension (19) of the crankshaft (5) mounted on the engine body and a shaft (25) steadily mounted on the extension (19), a gear wheel (23), a pinion (20) steadily mounted on shaft (25) and an enertia fly wheel (17) steadily mounted on the shaft (25), the pinion and the gear wheel being engaged with each other; when the crankshaft (5) rotates with the extension (19), the gear wheel (23) will rotate with the pinion (20), then causing the rotational speed of shaft the (25) to increase more than the crankshaft (5).

10. The magnetic energy engine as desribed in claim 9,
characterized in that at deast one set of the gear wheel and the pinion (23) and (20) is rotably sleeved on the shaft (25), at least one set of the pinion and the gear wheel (20) and (23) is rotably sleeved on the extension (19), the pinion and the gear wheel (20) and (23) on the extension (19) are engaged with the gear wheel and the pinion (23) and (20) on the shaft (25), all being rotable freely relative to the shafts (19), (25).

11. The magnetic energy engine as described in claim 1,
characterized in further comprising a force enhancing device, said device including: an engine body (35); a spindle (32) mounted on engine body (35), said spindle (32) being connected with the shaft (25) by a coupler; propelling disks (33) steadily mounted on the spindle, force-enhancing magnetic cylinders (34) rotably mounted in the inner hole of the engine body, a larger unidirectional fly wheel rotably mounted on the spindle (32) and smaller unidirectional fly wheel (31) rotably mounted on spindle (32), in which smaller unidiractional fly wheel, relative to the propelling disk (33), being rotably mounted in the vicinify of the propelling disk (33), and larger unidirctional fly wheel (30), relative to the smaller unidirectional fly wheel (31), being rotably mounted in the vicinity of the smaller unidirectional fly wheel (31); one end of connecting bars (43) for the larger unidirectional fly wheel being rotably connected on the larger unidirectional fly wheel (30), one end of connecting bars (42) for the smaller unidirectional fly wheel being rotably connected on the smaller unidirectional fly wheel (31), and the other ends of the connecting bars (43) and (42) for larger and smaller unidirectional fly wheels being rotably connected with one end of force-enhancing push rods (39) and rotably connected with the outer ring of the propelling disk (33) to form an interlocked lever motion device; fly wheel stator magnetic blcoks (27) mounted on the smaller unidirectional fly wheel (31), rotator magnetic blocks (28) mounted in the vicinity of the joint of force-enhancing push rod and the connecting bars (42), (43), and magnetic cylinder stator magnetic blocks (29) mounted on the inner wall of the force-enhancing magnetic cylinders (34); in which fly wheel stator magnetic blocks (27) and the rotator magnetic blocks (28), as well as magnetic cylinder stator magnetic blocks (29), being mounted concentrically and oppositely in the same planes; the fly wheel stator magnetic blocks (27) and the rotator magnetic blocks (28) being unlike-pole matched, and the magnetic cylinder stator magnetic blocks (29) and the rotator magnetic blocks (28) being unlike-pole matched; when the crankshaft (5) rotates together with the spindle (32), and together with the rotator magnetic blocks (28), when the rotator magnetic blocks (28) rotates to the mutually attractive position of the fly wheel stator magnetic block (27), unlike-pole mutual attraction occurs, and due to the effect of unidirectional rotation of the smaller unidirectional fly wheel, force-enhancing push rods (39) is pushed forward, rotaing the propelling disks (33) by an angle; then the rotator magnetic blocks (28) and the fly wheel stator magnetic blocks (27) which attracts the former are gradually aparted from the mutlially attraction positions; again, the rotator magnetic block (28) and the magnetic cylinder stator magnetic blocks (29) are in the mutually attractive positions, since the rotational direction of both larger unidirectional fly wheel and the smaller unidirectional fly wheel is the same; again, causing push rods (39) pushes the propelling disks (33) forward to rotate by a new angle; and, the rotator magnetic blcoks (28) and the magnetic cylinder stator magnetic blocks (29) which attracts the former are aparted gradually from the mutually attractive positions; lever motion is so repeatedly carried out; the propelling disks (33) is caused to rotate the spindle continuously and forcefully towards one direction to do work externally.

12. The magnetic energy engine as described in claim 11,
characterized in that each set of the connecting bars (42) and (43) for larger and smaller unidirectional fly wheels, as well as force-enhancing push rod, are preferably to have six pairs, and each set of fly wheel stator magnetic block is preferably to have six pieces, being arranged along the smaller circumferential surface of the smaller unidirectional fly wheel; each set of rotator magnetic block is preferably to have six pieces, and each set of magnetic cylinder stator magnetic block is preferably to have twelve pieces, being equally arranged along the inner wall of the magnetic cylinder.

13. The magnetic energy engine as described in claim 9,
characterized in that the shaft (25) is the extension of the spindle (32).

14. The magnetic energy engine as described in claim 11,
characterized in that external gear is provided on the outer ring of the smaller unidirectional fly wheel (31), and an external gear is provided on the outer ring of the force-enhancing magnetic cylinders (34).

15. The magnetic energy engine as descibed in claim 1,
characterized in further comprising brake bandle shaft (40) rotably mounted on the engine body (35), a brake gear (41) being mounted on a handle shaft (40) and said gear (41) being engaged with the external gear for the smaller unidirectional fly wheel and the external gear for the force-enhancing magnetic cylinders (34) respectively, the gear (41) on the brake handle shaft (40) rotates the external gear for the smaller unidirectional fly wheel and the external gear of the force enhancing magnetic cylinder, thus causing the magnetic cylinder stator magnetic blocks (29) and the fly wheel stator magnetic block (27) relative to the rotator magnetic blocks (28) occurs variation of matually attractive position and stop position, rotating from the stop position to the attractive position which work is done or vise versa.

16. The magnetic energy engine as described in claim 1,
characterized in that said at least two crankshaft connecting rods (13) can be disposed on two the crank pins (11), and implemented in a plane.
